# EUROPEAN PATENT APPLICATION

(11) **EP 4 667 967 A1**
(43) Date of publication of application: **24.12.2025**
(21) Application number: 25183151.7
(22) Date of filing: 16.06.2025
(51) Int. Cl.: G01S 7/497, G06T 7/80, G06V 20/56

(54) **VEHICLE CAMERA SYSTEM WITH MULTIPLE-CAMERA ALIGNMENT**

(30) Priority: 17.06.2024 EP 24182654
(71) Applicant: Volvo Truck Corporation, 405 08 Göteborg (SE)
(72) Inventor: BERNE, Nicolas, 38540 HEYRIEUX (FR)
(74) Representative: Ström & Gulliksson AB

(57) **Abstract**

A computer system (700) comprising processing circuitry (702) for aligning at least a first camera (50) and a second camera (50b) of a vehicle (10), the computer system (700) is provided. The system is configured to project, from at least one light projector (60) of the vehicle (10), a light pattern (62) onto a ground (G) spanning field views of the first camera (50a) and the second camera (50b), obtain first image data (54a) from the first camera (50a) and second image data (54b) from the second camera (50b), align a first distance overlay line (56a) with a first portion (63a) of the emitted light pattern (62) of the first image data (54a), and align a second distance overlay line (56b) with a second portion (63b) of the emitted light pattern of the second image data (54b) wherein the alignment of the first and second distance overlay line (56a, 56b) aligns the first and second camera (50a, 50b) in a ground plane.

## Description

### TECHNICAL FIELD

The disclosure relates generally to camera systems in vehicles. In particular aspects, the disclosure relates to vehicle camera system with multiple-camera alignment. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Many vehicles are equipped with several cameras in a vehicle camera system. The plurality of cameras may be used for different purposes, such as for example in advance driver assistance systems (ADAS) to enhance safety and improve the driving experience for both autonomous and non-autonomous vehicles. Use of multiple cameras requires calibration with one another (e.g., left rearfacing camera, right rearfacing camera, and center rearfacing camera) to gain accurate data. When the cameras are physically moved or adjusted, to align the three cameras together in digital space typically requires manual calibration by a user. This manual alignment process takes a lot of time and is prone to cause inaccurate image readings. There is thus a need for a system for automatically aligning a plurality of cameras.

### SUMMARY

According to a first aspect of the disclosure, a computer system for aligning at least a first camera and a second camera of a vehicle, the computer system comprising processing circuitry configured to project, from at least one light projector of the vehicle, a light pattern onto a ground spanning field views of the first camera and the second camera, obtain first image data from the first camera, wherein the first image data includes a first portion of the emitted light pattern from the at least one light projector; obtain second image data from the second camera, wherein the second image data includes a second portion of the emitted light pattern from the at least one light projector; align a first distance overlay line with the first portion of the emitted light pattern of the first image data by adjusting the first distance overlay line or adjusting the first portion of the emitted light pattern; align a second distance overlay line with the second portion of the emitted light pattern of the second image data by adjusting the second distance overlay line or adjusting the second portion of the emitted light pattern, wherein the alignment of the first and second distance overlay line aligns the first and second camera in a ground plane.

The first aspect of the disclosure may seek to migrate the problems relating to the need of manually adjustment of the cameras, such as the adjustment between the left line and the right line, every time one of the cameras are moved or otherwise adjusted. Moreover, the first aspect of the disclosure may seek to migrate the problems relating to manual alignment of overlay distance line in each camera view where the driver has to leave the vehicle in order to perform the alignment. A technical benefit may include to achieve a common reference point for the driver across multiple cameras. Yet further, a technical benefit may include that the overlay lines correspond to a real reference point which gives the possibility to check the alignment on a regular basis. A further technical benefit may include an efficient and cost-effective way of aligning the cameras without the need of a complete calibration process.

Optionally in some examples, including in at least one preferred example, the alignment of at least one of the first distance overlay line and the second distance overlay line is performed by receiving a user input. A technical benefit may include that the driver feels secure that the alignment is done properly while at the same time being able to sit in the vehicle during the alignment process.

Optionally in some examples, including in at least one preferred example, the alignment of at least one of the first distance overlay line and the second distance overlay line is performed automatically by the processing circuitry. A technical benefit may include a stable and efficient alignment process, reducing driver workload and improving overall vehicle safety by ensuring accurate camera alignment without requiring any manual intervention.

Optionally in some examples, including in at least one preferred example, the alignment of the first distance overlay line with the first portion and the alignment of the second distance overlay line with the second portion are visibly shown on at least one display.

Optionally in some examples, including in at least one preferred example, the processing circuitry is further configured to display the first portion of the emitted light pattern and the first distance overlay line on at least one display, and/or display the second portion of the emitted light pattern and the second distance overlay line on at least one display. A technical benefit may include an efficient and user-friendly alignment process.

Optionally in some examples, including in at least one preferred example, the processing circuitry is further configured to obtain a first distance overlay line, and obtain a second distance overlay line.

Optionally in some examples, including in at least one preferred example, the processing circuitry is further configured to process position data of the first portion of the emitted light pattern and position data of the second portion of the emitted light pattern, align the first distance overlay line with the first portion of the emitted light pattern based on the position data; and align the second distance overlay line with the second portion based on the position data.

Optionally in some examples, including in at least one preferred example, wherein the ground plane is defined as a plane extending in the x and y direction. A technical benefit may include an efficient and cost-effective way of aligning the cameras without the need of a complete calibration process.

Optionally in some examples, including in at least one preferred example, the processing circuitry is further configured to process position data of the first portion of the emitted light pattern and position data of the second portion of the emitted light pattern, and reposition the field of view for the first camera and the second camera based on the position data.

Optionally in some examples, including in at least one preferred example, the processing circuitry is further configured to obtain information pertaining to the surrounding conditions of the vehicle; and adapt the emitted light pattern based on said obtained information. A technical benefit may include a more secure alignment process as the alignment can be performed in different conditions while still achieving good results.

Optionally in some examples, including in at least one preferred example, the information pertaining to the surrounding conditions of the vehicle comprises one or more of: temperature, humidity, weather, air pressure, wind speed, solar radiation, pollution levels, and road surface conditions.

Optionally in some examples, including in at least one preferred example, the adaptation of the emitted light pattern comprises changing the wavelength of the emitted light, changing the intensity of the emitted light and/or changing the shape of the emitted light pattern. A technical benefit may include a more secure alignment process as the alignment can be performed in different conditions while still achieving good results.

Optionally in some examples, including in at least one preferred example, the information pertaining to the surrounding conditions of the vehicle comprises one or more of: temperature, humidity, weather, air pressure, wind speed, solar radiation, pollution levels, and road surface conditions. A technical benefit may include a more secure alignment process as the alignment can be performed in different conditions while still achieving good results.

Optionally in some examples, including in at least one preferred example, the processing circuitry is further configured to identify at least one of the shape of the light pattern, the first portion or the second portion, wherein the shape is associated with an identifier containing characteristics of the vehicle. A technical benefit may include a faster and more vehicle specified alignment process.

Optionally in some examples, including in at least one preferred example, the shape of the light pattern, the first portion and/or the second portion is a bar code or a logotype of the vehicle brand. A technical benefit may include a more user-friendly alignment process.

Optionally in some examples, including in at least one preferred example, the processing circuitry is further configured to obtain third image data from a third camera, the third image data including a third portion of the emitted light pattern from the at least one light projector; align a third distance overlay line with the third portion of the emitted light pattern of the first image data; process position data of the first portion of the emitted light pattern, position data of the second portion of the emitted light pattern and position data of the third portion of the emitted light pattern to align the first camera, the second camera and the third camera relative to each other. A technical benefit may include that it is possible to align several cameras in a time efficient manner.

Optionally in some examples, including in at least one preferred example, the alignment process is automatically triggered based on one or more of: data from one or more sensors indicating a potential misalignment, upon vehicle start-up, periodically based on a pre-set timer, or as part of a routine vehicle diagnostic check.
Optionally in some examples, including in at least one preferred example, the processing circuitry is further configured to generate a notification to the driver upon completion of the alignment process.

According to a second aspect of the disclosure, a vehicle comprising at least one light projector, a camera system and the computer system. The second aspect of the disclosure may seek to eliminate the need for lengthy calibration processes of cameras.

Optionally in some examples, including in at least one preferred example, the vehicle is further comprising a display for showing the alignment of the first distance overlay line and a second distance overlay line.

Optionally in some examples, including in at least one preferred example at least one light projector is arranged on a rear portion of the vehicle. A technical benefit may include that the light pattern is visible from cameras arranged on the right and left side of the vehicle, thus providing an effective alignment process.

Optionally in some examples, including in at least one preferred example, camera system comprises at least two cameras, being a left rear-facing camera, a right rear-facing camera or a center rear-facing camera. A technical benefit may include an effective alignment process.

According to a third aspect of the disclosure, a computer-implemented method for aligning at least a first camera and a second camera of a vehicle, the method comprising: projecting, from at least one light projector of the vehicle, a light pattern onto a ground spanning field views of the first camera and the second camera, obtaining, from a camera system, first image data from the first camera, and second image data from the second camera, wherein the first image data includes a first portion of the emitted light pattern from the at least one light projector; obtaining, from a camera system and wherein the second image data includes a second portion of the emitted light pattern from the at least one light projector; aligning a first distance overlay line with the first portion of the emitted light pattern of the first image data by adjusting the first distance overlay line or adjusting the first portion of the emitted light pattern; and aligning a second distance overlay line with the second portion of the emitted light pattern of the second image data by adjusting the second distance overlay line or adjusting the second portion of the emitted light pattern, wherein the alignment of the first and second distance overlay line aligns the first and second camera in a ground plane.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIGS. 1A-D** are exemplary vehicles according to different examples.
**FIG. 2** is an exemplary system diagram according to an example.
**FIGS. 3A-D** are exemplary vehicles according to different examples.
**FIGS. 4A-I** are exemplary light patterns according to different examples.
**FIGS. 5A-B** are exemplary displays according to different examples.
**FIG. 6** is an exemplary system diagram according to an example.
**FIG. 7** is a flow chart of an exemplary method according to an example.
**FIG. 8** is another view of **FIG. 6****,** according to an example.
**FIG. 9** is a flow chart of an exemplary method according to an example.
**FIG. 10** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

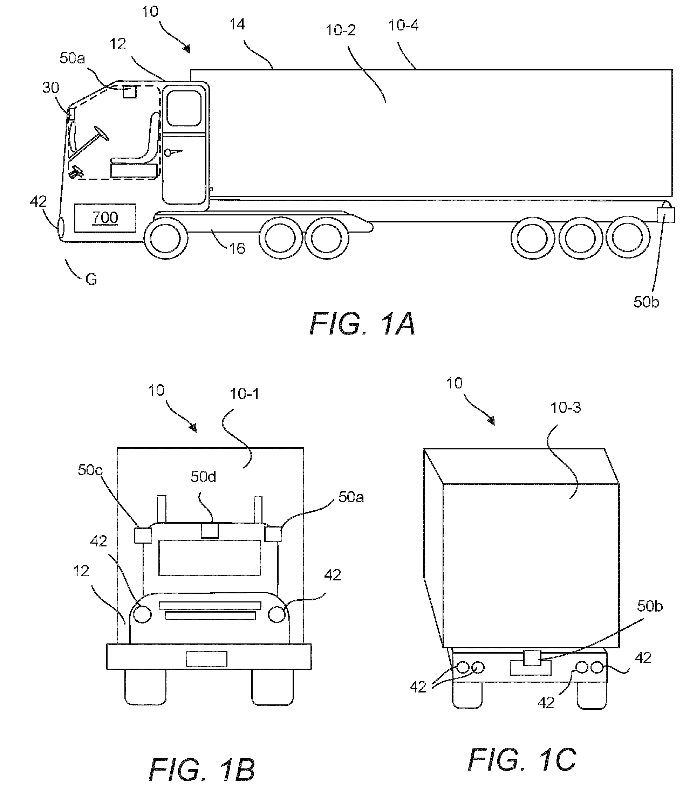

**FIGS. 1A-1C** are exemplary schematic illustrations of a vehicle **10.** The vehicle **10** is illustrated as a heavy-duty vehicle, but other vehicle types may be used. The vehicle **10** in **FIG. 1A** is shown from a first side **10-2,** and includes a corresponding second side **10-4** at an opposing side. **FIG. 1C** shows a vehicle **10** from its rear side **10-3.** This vehicle **10** comprises a tractor unit **12** which is arranged to tow a trailer unit **14.** In other examples, other heavy-duty vehicles may be employed, e.g., trucks, buses, and construction equipment. The vehicle **10** comprises vehicle units and associated functionality as would be understood and expected by a skilled person, such as a powertrain, chassis, and various control systems. Heavy-duty vehicles present unique challenges for camera alignment due to their size, articulation, and load variations. The length of these vehicles can make it difficult to establish a stable reference point for alignment, and the articulation between the tractor and trailer can introduce additional degrees of freedom that must be accounted for. Furthermore, the load carried by the vehicle can significantly affect its ride height and orientation, requiring frequent camera realignment to maintain accurate sensor data. The camera alignment system described herein addresses these challenges by providing an automated, reliable, and adaptable solution that can compensate for these factors, ensuring accurate sensor data regardless of the vehicle's configuration or operating conditions.

The vehicle **10** is arranged on a surface **G.** The surface **G** may for example be ground surface such as concreate, asphalt, gravel, earthen, murrum, grass, or any suitable flooring materials used in machine halls or similar.

The vehicle **10** further comprises a plurality of exterior lights **42** (hereinafter referred to as lights **42** for reasons of brevity). The lights **42** are arranged exterior to the vehicle **10,** such that they may be directly or indirectly (for instance through a reflection) visible to objects in the vicinity of the vehicle **10.** The lights **42** may be any suitable device capable of emitting a light, such as OLEDS, QLEDs, Micro LEDs, RGB LEDs, projector lights. Exemplary lights **42** of the vehicle **10** may include braking lights, headlights, rear lights, emergency alert lights, construction zone warning lights, lane changing signals, hazard lights, deceleration indicators, road awareness lights, turn signal lights, fog lights, and/or any additional type of lights which may be utilized by various types of vehicles.

The vehicle **10** comprises a plurality of sensors 50a-50d (may be referred to collectively as sensors **50**). The sensor **50** may be a camera, a lidar sensor, a radar sensor, an ultrasonic sensor or an infrared sensor. The sensors **50** are configured to sense the surroundings of the vehicle **10.** The range and responsiveness of the sensors **50** may depend on sensor type, sensor location, lens type, image sensor resolution, lighting conditions, ambient conditions (e.g., weather, humidity, fogginess), conditions of electronic components, potential obstructions in the field of view, latencies in computer systems, etc.

In some examples, the sensor **50** is a smart sensor configured to process sensed information and make a detection decision related to a detection of an object.. For instance, the smart sensor may be able to detect lane markings, other vehicles, pedestrians, traffic signals, or road signs. The smart sensor may comprise a microcontroller, processor (e.g. PLC, CPU, DSP), FPGA, ASIC or any other suitable digital and/or analog circuitry capable of processing sensing data. The smart sensor may further comprise a memory implemented in any known memory technology, including but not limited to E(E)PROM, S(D)RAM or flash memory. The memory may be integrated with or internal to the microcontroller/processor/circuitry. This processing capability allows the sensor to filter out noise, compensate for lighting variations, and prioritize relevant data, resulting in more accurate and reliable input for the camera alignment system.

In other examples, the sensor **50** is a sensor not capable of processing information itself. Unlike smart sensors, which have built-in processing capabilities to interpret and analyze data, "dumb" sensors or "passive" sensors are devices that detect and measure physical properties or phenomena without any processing or interpretation of the sensing data being collected. These sensors typically generate raw analog or digital signals that need to be processed by external systems or devices to derive meaningful information or insights.

The sensor **50** may be operatively connected (e.g., wired or wirelessly) to suitable devices, systems and features of the vehicle **10.** The wireless interface and associated communication protocols may be based on any known communication technology known in the art, such as one or more of HTTP(S), TCP/IP, UDP, FTP, SMTP, DNS, DHCP, SSH, POP3, SCP, NFS, SFTP, ICMP, ARP, RTP, RTCP, IEEE 802.11, IEEE 802.15, ZigBee, WirelessHART, WiFi, Bluetooth^{®}, BLE, RFID, WLAN, MQTT IoT, CoAP, DDS, NFC, AMQP, LoRaWAN, Z-Wave, Sigfox, Thread, EnOcean, mesh communication, any form of proximity-based device-to-device radio communication, LTE Direct, W-CDMA/HSPA, GSM, UTRAN, LTE, IPv4, IPv6, 6LoWPAN, IrDA, or 5G NR.

In the example of **FIGS. 1A-C** the sensors are cameras **50.** In **FIGS. 1A-C** the vehicle is arranged with a left rear-facing camera **50a,** a right rear-facing camera **50b** and a center rear-facing camera **50c.** In other examples, the vehicle **10** may comprise front view camera(s) and side view camera. In some examples, the vehicle **10** may include different sensor arrangements having one or more cameras **50** arranged at any suitable location with respect to the vehicle **10,** such as at the tractor unit **12** or the trailer unit **14,** a wheel portion **16,** and the like.

The vehicle **10** further comprises a visual information module **30** configured to display visual information to the user. The visual information module **30** may comprise one or more display units. A display unit may for example be a liquid crystal display (LCD) or a cathode ray tube (CRT). In one example, the visual information module **30** may e.g. comprise a head-up display HUD or an augmented reality display configured to display visual information to the user. The visual information module 30 is configured to display the emitted light pattern, the distance overlay lines, and the alignment status to the user. This allows the driver to monitor the alignment process in real-time and verify the accuracy of the camera alignment, providing a clear and intuitive interface for the system. The display can be arranged in various configurations to optimize the user experience. For example, a single display unit can be split into multiple screens, each dedicated to displaying a different camera view or alignment parameter. Alternatively, the visual information module 30 may comprise multiple physical display units, each positioned to provide a convenient viewing angle for the driver. In some embodiments, the augmented reality display may overlay the alignment information directly onto the driver's view of the road, providing a seamless and intuitive integration of the system into the driving experience.

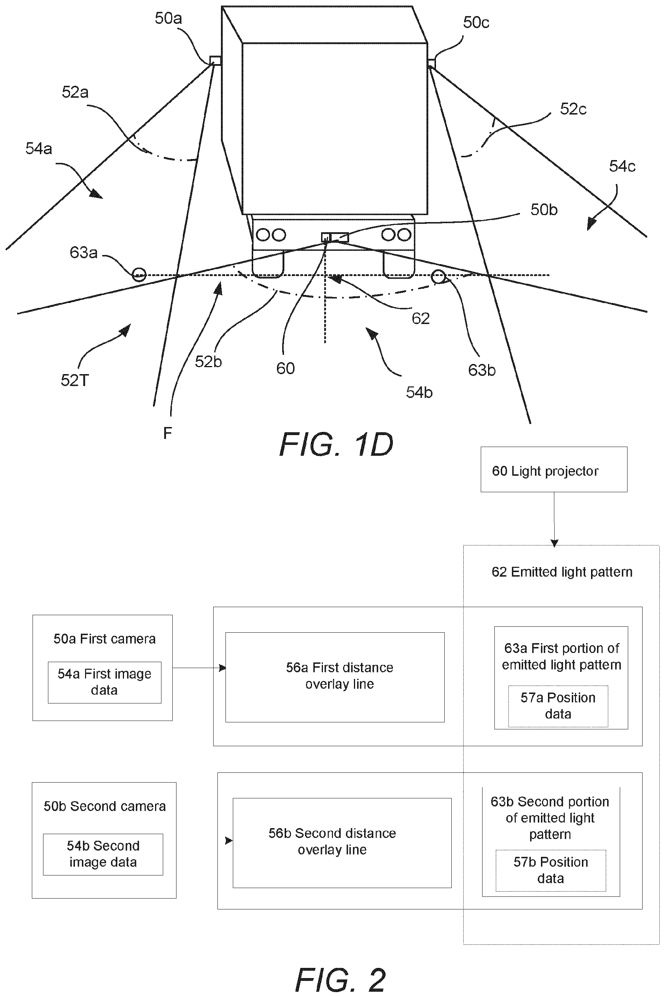

The vehicle **10** further comprises a computer system **700.** The computer system **700** is advantageously operatively connected to all suitable devices, systems and features of the vehicle **10,** such as the sensors **50.** The computer system **700** is configured to obtain sensing data from the sensors **50** and will be discussed more in detail with reference to **FIG. 2B.**

In the example shown in **FIG. 1D****,** the vehicle **10** comprises a camera system comprising at least a left rear-facing camera **50a,** a right rear-facing camera **50c** and a center rear-facing camera **50b.** The left rear-facing camera **50a** is configured to capture image data **54a** of an area of the left-rear side of the vehicle **10,** which is between the left side of the vehicle **10** and the rear side of the vehicle **10.** The right rear-facing camera **50c** is configured to capture image data **54c** of an area of the right-rear side of the vehicle, which is between the right side of the vehicle **10** and the rear side of the vehicle **10.** The center rear-facing camera 50b is configured to capture image data **54** of an area of the rear side of the vehicle.

The cameras **50a-c** each have a respective field-of-view **52a-c.** The left rear-facing camera **50a** may capture an image **54** of the left rear field of view to acquire an image of the left rear field of view **52a.** The right rear-facing camera **50c** may capture an image **54** of the right rear field of view to acquire an image **54** of the right rear field of view **52c.** The center rear-facing camera **50b** may capture an image of the center field of view to acquire an image of the center rear field of view **52b.**

The cameras **50** may generate an overlapping field of view **52T,** which is an area where at least two field of view overlap. The overlap may for example be an overlap between the center rear field of view **52b** and the left rear-facing camera **50a** or an overlap between the center rear field of view **52b** and right rear field of view **52c.**

In one example, the cameras **50** are high-resolution cameras. The resolution may for example be ranging between 720p and 1080p. The cameras **50** may have wide-angle lenses that provide a wide field of view.

In one example, the plurality of cameras **50a-c** are asymmetrically arranged. The plurality of cameras may be asymmetrically arranged in relation to each other and/or in relation to the vehicle.

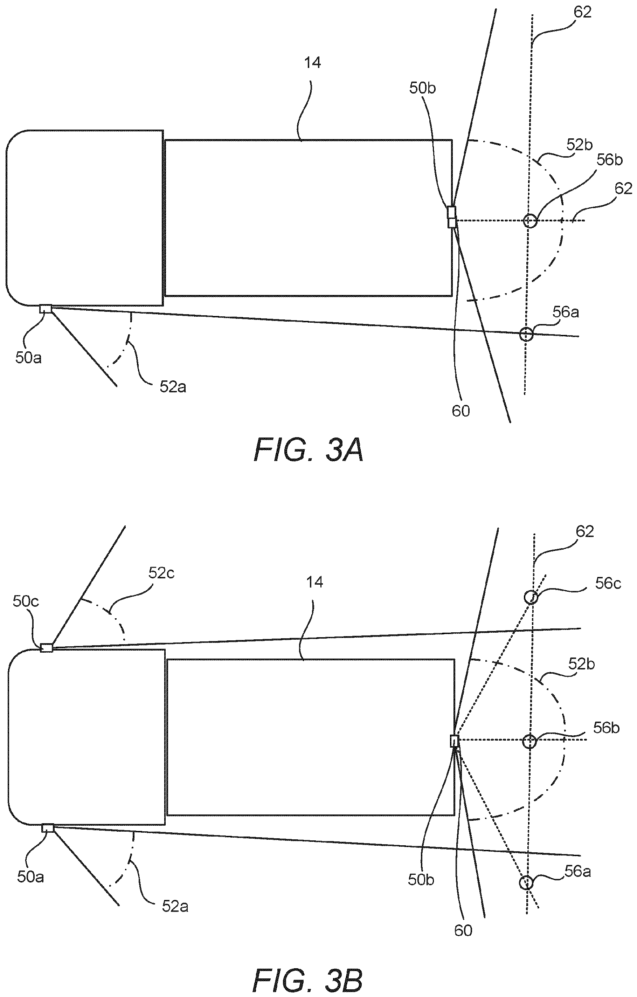

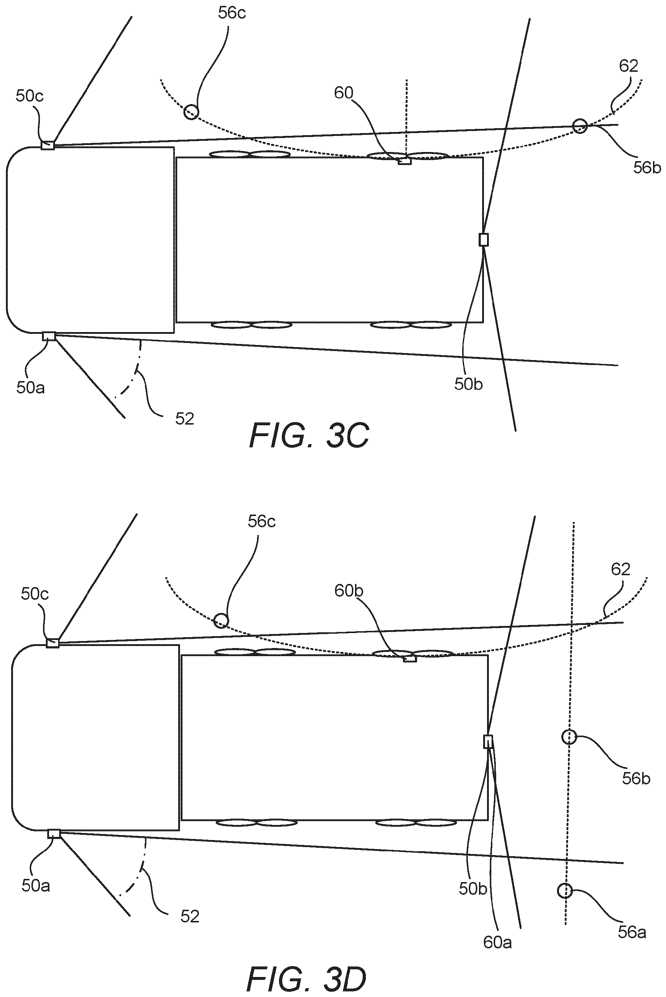

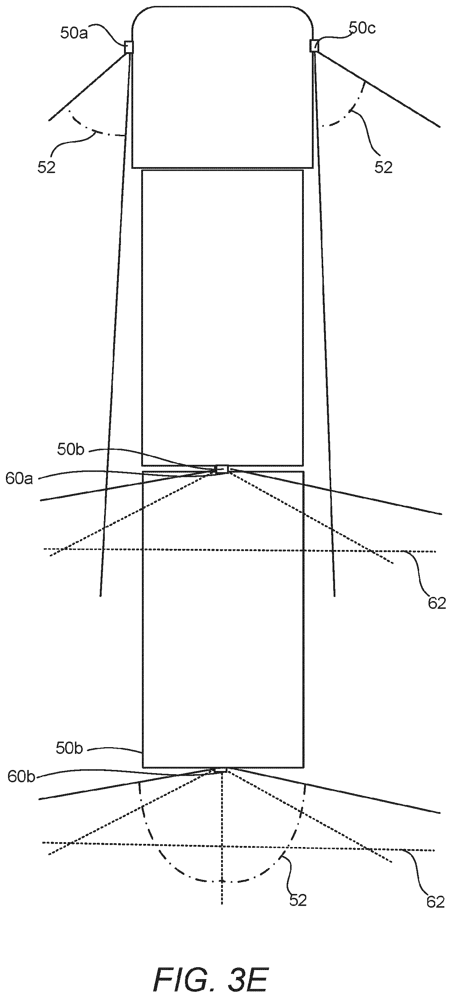

There is a need for a simplified calibration or alignment process so that the cameras can be aligned with one another. In order to achieve the alignment, the vehicle **10** is arranged with at least one light projector **60.** The light projector **60** is configured to project a light pattern **62** (as illustrated in **FIGS. 3 -4**) onto the ground **G.** The light projector **60** emits an emitted light pattern **62** comprising at least a first portion **63a** and a second portion **63b.** Existing camera calibration processes often require specialized equipment, manual adjustments, and significant time and expertise. In contrast, the present invention provides a simplified process that can be performed automatically or with minimal user input, reducing the time required for calibration and eliminating the need for specialized equipment or training.

**FIG. 2** illustrates an example of such an improved alignment system. In this example the vehicle **10** comprises at least a first camera **50a** and a second camera **50b.** The first camera **50a** generates a first image data **54a.** The second camera **50b** generates a second image data **54b.** The light projector **60** projects an emitted light pattern **62** onto the ground. The light projector **60** may also be referred to as a level or an optical level. The light projector **60** is preferably an optical instrument configured to emit light to a surface. In one example the optical instrument is a lens. In one example the optical instrument is a reflector. In one example the light projector **60** comprises a laser.

The emitted light pattern **62** comprises at least a first portion **63a** and a second portion **63b.** The first portion **63a** and a second portion **63** may be different from each other, or refer to the same portion of the pattern. The first image data **54a** obtained from the first camera **50a** includes a first portion **63a** of the emitted light pattern **62.** The second image data **54b** obtained from the second camera **50b** includes a second portion **63b** of the emitted light pattern **62.** The aim is to align the first camera **50a** and the second camera **50b** relative each other by aligning a first distance overlay line **56a** with the first portion **63a** of the emitted light pattern **62** of the first image data **54a,** and aligning a second distance overlay line **56b** with the second portion **63b** of the emitted light pattern of the second image data **54b.** This alignment may be achieved by precisely matching the position and orientation of the distance overlay lines **56a, 56b** with the corresponding features in the emitted light pattern **62** as captured by the cameras **50a, 50b** ensuring an accurate and reliable representation of the real-world environment. Compared to traditional methods that rely on fixed calibration targets or complex mathematical models, the use of an emitted light pattern provides a more robust and adaptable alignment solution. The emitted light pattern can be projected onto any surface, regardless of its texture or reflectivity, and its shape and intensity can be adjusted to compensate for varying lighting conditions. This allows the camera alignment system to operate effectively in a wider range of environments and scenarios than existing methods.

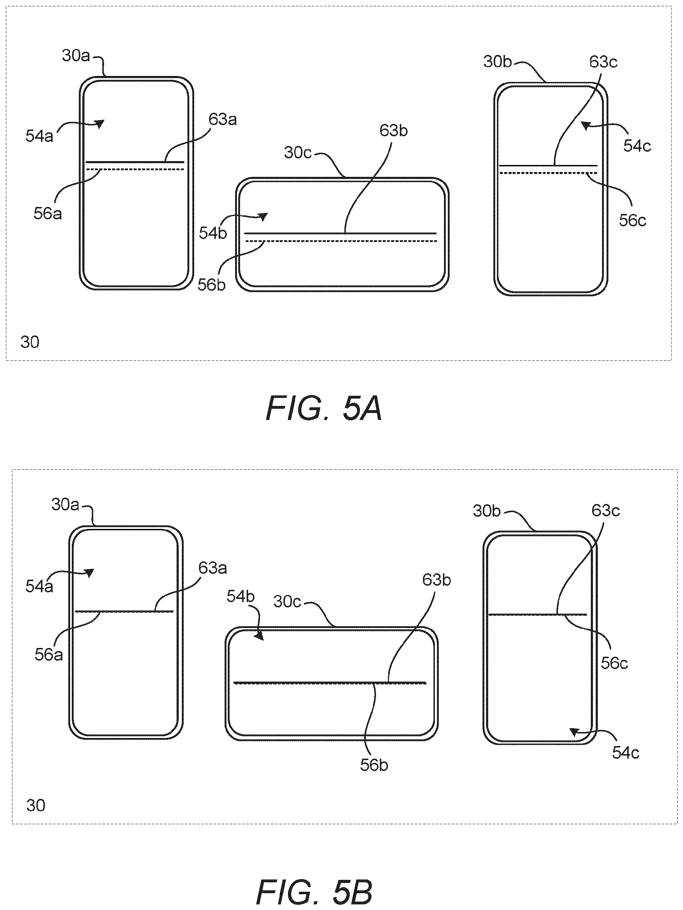

In one example, the distance overlay lines **56a, 56b** are part of the image data **54a, 54b** received from the cameras **50a, 50b.** The distance overlay lines **56a, 56b** may be a mask or layer that is put on top of the image received from the cameras **50a, 50b,** as illustrated in **FIGS. 5A-B****.** In one example the distance overlay lines **56a, 56b** are added to the image data **54a, 54b** by the computer system **700.** The distance overlay lines **56a** and **56b** may be configured in various ways to enhance their visibility and functionality. For example, the overlay lines may be color-coded to distinguish them from the emitted light pattern or other elements in the image. The thickness of the lines may be adjusted to provide a clear visual indication without obscuring the underlying image data. The lines may also be animated or include dynamic elements that change based on the alignment parameters, providing a more interactive and informative display. In some embodiments, the overlay lines may be replaced with more complex graphical indicators, such as arrows, boxes, or other shapes, to provide a more intuitive representation of the alignment status. The overlay lines can also be dashed, dotted, or solid. Furthermore, the overlay lines may be configured to change color or blink when the alignment is out of tolerance, providing a clear warning to the driver.

In one example, adjusting the camera settings (such as for example zooming), the overlay lines will automatically adjust based on the adjustments made. In one example, the overlay lines will follow the zoom ratio. **FIGS. 3A** - **E** shows different examples of a vehicle **10** with at least one light projector **60.** The light projector **60** emits a light pattern **62** onto the ground surface **G.** The ground surface **G** is preferably the ground onto which the vehicle **10** is arranged. The emitted light pattern **62** is projected onto the ground surface **G.** Preferably, the camera alignment process is performed when the vehicle **10** is stationary to ensure accurate and stable measurements.

The at least one light projector **60** may be arranged at various positions at the vehicle, such as at the tractor unit **12,** the trailer unit **14,** near a wheel portion **16,** and the like. In one example, the light projector **60** is arranged on a rear portion of the vehicle **10.** The light projector **60** may be arranged on the rigid body or on a trailer. In one example the light projector **60** is arranged at or proximate one or more lights **42,** for example at or proximate to the brake and/or turn lights **42.**

In one example as illustrated in **FIG. 3A****,** the vehicle **10** is arranged with one light projector **60** arranged at a lower rear portion of the vehicle **10.** More specifically, the light projector **60** is arranged at a lower rear portion of the trailer **14.**

In the example of **FIG. 3A****,** the vehicle is arranged with at least two cameras **50a, 50b** generating first image data **54a** and second image data **54b,** respectively. In this example, the light pattern **62** is a plurality of lines. In the example illustrated in **FIG. 3A****,** the light pattern **62** comprises of a plurality of lines arranged in a specific pattern. The emitted light pattern **62** comprises at least a first portion **63a** and a second portion **63b.** The first and second portion **63a, 63b** may be arranged on or inside the field-of-view **52a-b.**

In the example of **FIG. 3B****,** the vehicle is arranged with at least three cameras **50a, 50b, 50c** generating first image data, second image data, third image data respectively. In the example illustrated in **FIG. 3B****,** the light pattern **62** consists of a plurality of lines arranged in a specific pattern. The light pattern **62** comprises of a curved line, having a center line arranged in its center point. The emitted light pattern **62** comprises at least a first portion **63a,** a portion **63b** and a third portion **63c.** The first, second or third portions **63a, 63b** may be arranged on or inside the field-of-view **52a-c.**

In one example as illustrated in **FIG. 3C****,** the vehicle **10** is arranged with one light projector **60** arranged at the left side of the vehicle **10.**

In one example as illustrated in **FIG. 3D****,** the vehicle **10** is arranged with two light projectors **60.** The first light projector **60a** is arranged at the rear portion of the vehicle 10 and emits a light pattern **62** towards the rear area of the vehicle **10.** The second light projector **60b** is arranged at a side portion of the vehicle **10,** and emits a light pattern **62** towards the side of the vehicle **10.** In this example, the light pattern **62** emitted from the first light projector **60a** and the second light projector **60b** differ in from one another.

In one example as illustrated in **FIG. 3E****,** the vehicle **10** is arranged with two light projectors **60,** each arranged at a lower rear portion of the vehicle **10.** More specifically, the first light projector **60a** is arranged at a lower rear portion of the first trailer **14a** and the second light projector **60b** is arranged at a lower rear portion of the second trailer **14b.**

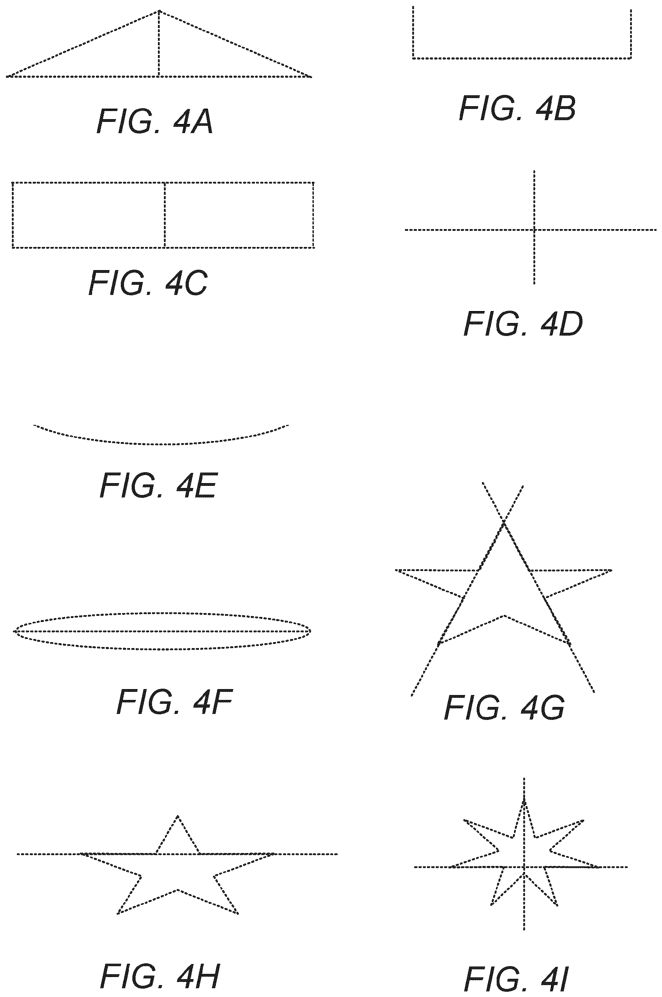

The light pattern **62** may be of different shapes and sizes. In addition to the examples described with reference to **FIGS. 3A-E****,** further examples are illustrated in **FIGS. 4A-I****.** The light pattern **62** may be in the form of a triangle, a triangle having a center line (as shown in **FIG. 4A**), a horizontal line having vertical endings (**FIG. 4B**), a rectangular box, a rectangular box having a center line (**FIG. 4C**), a cross (**FIG. 4D**), a curved portion (**FIG. 4E**), an ellipse, an ellipse having a center line (**FIG. 4F**), a star, a star having two diagonal lines (**FIG. 4G**), a star having one horizontal line (**FIG. 4H**), or a star having a cross (**FIG. 4I**). The above examples are not limiting, and the light pattern **62** may take many other shapes and sizes. As an additional example, the light pattern **62** may take the form of a logotype of the particular vehicle brand. Yet further, the light pattern **62** may be in the form of a bar code, for example a QR-code, associated with an identifier which in turn may be associated with characteristics of the vehicle **10.** In other words, the shape of the whole light pattern **62,** the first portion **63a** and/or the second portion **63b** may be a bar code or a logotype of the vehicle brand. The emitted light pattern **62** is preferably a structured light pattern, comprising a specific arrangement of light points, lines, or shapes designed to encode information about the vehicle's surroundings. For example, the structured light pattern may include a grid of light points with varying spacing or intensity, or a series of coded stripes that can be decoded by the cameras **50** to determine the distance and orientation of objects in the scene. The structured light pattern may also include unique identifiers or markers that are specific to the vehicle model or configuration, allowing the alignment system to automatically adapt to different vehicle types. This coded information enhances the robustness and accuracy of the alignment process by providing a more detailed and informative representation of the projected pattern.

The emitted light may be of any suitable wavelength. In one example the emitted light is in the visible light spectrum. Hence, the emitted light is in the range between 380 - 750 nm. The color of the emitted light pattern **62** may vary. In one example, the emitted light is in the infrared (IR) spectrum. Hence, the emitted light is in the range between 700 nm - 1 mm.

In one example, the light emitted from the light projector **60** is of a predetermined intensity or brightness. The intensity of the emitted light pattern **62** may vary. In one example the light pattern is a continuous line. In one example the light pattern comprises separated lines.

**FIGS. 5A-B** are exemplary views of a visual information module **30** configured to display visual information to the user. In this specific example the visual information module **30** comprises a first display **30a,** a second display **30b** and a third display **30c.** Each display **30** is configured to display visual information relating to the cameras **50** of the vehicle. The first display **30a** is configured to display information of the image captured by the left rear-facing camera **50a.** The second display **30b** is configured to display information of the image captured by the right rear-facing camera **50c.** The third display **30c** is configured to display information of the image captured by the center rear-facing camera **50b.** As is readily understood by a person skilled in the art, all images of the plurality of cameras could be arranged in one single display **30** having different viewing points for the different images.

In the illustrative example shown in **FIG. 5A****,** the displays **30a-c** are showing image data **54a, 54b, 54c** captured by the cameras **50a-c** when the light leveling **60** is emitting a light pattern **62.** The image data **54a, 54b, 54c** each comprises a portion **63a, 63b, 63c** of the emitted light pattern **60.** The portions **63a, 63b, 63c** of the emitted light pattern **60** are in this example exemplified as a straight line. The displays **30a-c** are also configured to show a first, second and third distance overlay lines **56a, 56b, 56c.** The first, second and third distance overlay lines **56a, 56b, 56c** are in this example exemplified as a dotted straight line. In the illustrative example shown in **FIG. 5A****,** the cameras are not yet aligned relative each other. The first, second and third distance overlay lines **56a, 56b, 56c** are thus not aligned with the respective portions **63a, 63b, 63c** of the emitted light pattern **60.**

In the illustrative example shown in **FIG. 5B****,** the cameras have been aligned relative each other. The first, second and third distance overlay lines **56a, 56b, 56c** are aligned with the respective portions **63a, 63b, 63c** of the emitted light pattern **60.**

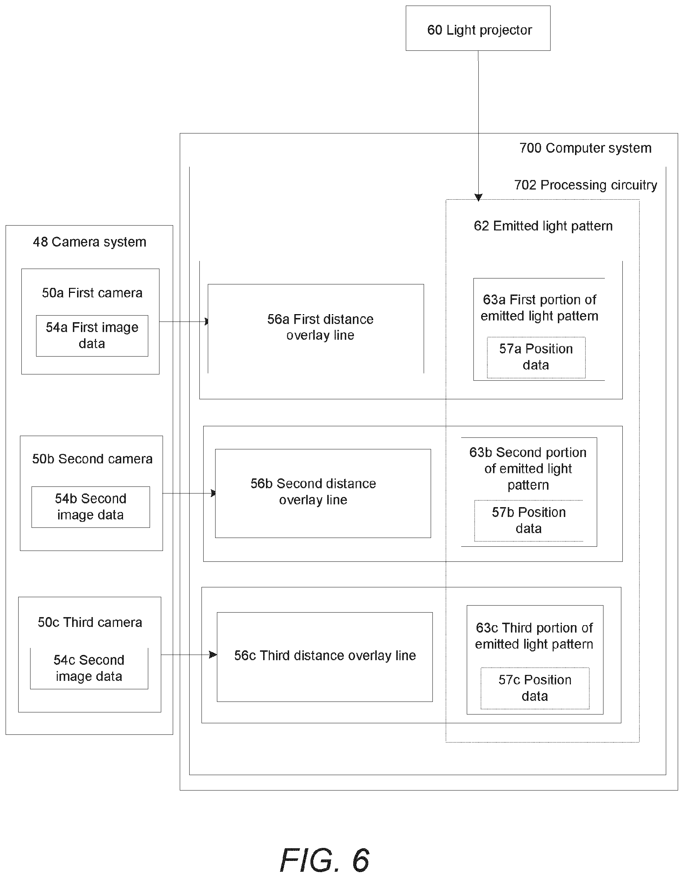

**FIG. 6****,** depicts a computer system **700** according to an example. The computer system **700** comprises processing circuitry **702.** The processing circuitry **702** is configured to obtain image data **54a, 54b, 54c** from the first, second and third cameras **50a, 50b, 50c** of the camera system **48** of the vehicle **10.** The at least one light projector of a vehicle, projects a light pattern **62** onto a ground spanning field views **F** of the first camera **54a,** the second camera **54b** and the third camera **54c.** In one example, the cameras are asymmetrically arranged. In one example, the alignment process is especially beneficial for asymmetric camera settings.

The first image data **54a** includes a first portion **63a** of the emitted light pattern from the at least one light projector. The second image data **54b** includes a second portion **63b** of the emitted light pattern **62** from the at least one light projector **60.** The third image data **54c** includes a third portion **63c** of the emitted light pattern **62** from the at least one light projector **60.**

The processing circuitry **702** is configured to align a first distance overlay line **56a** with the first portion **63a** of the emitted light pattern of the first image data, align a second distance overlay line **56b** with the second portion **63b** of the emitted light pattern of the second image data and align a third distance overlay line **56c** with the third portion **63c** of the emitted light pattern of the third image data. In some examples, the processing circuitry **702** analyzes the first image data **54a,** the second image data **54b,** and the third image data **54c** to identify the precise location and characteristics of the emitted light pattern portions **63a, 63b,** and **63c.** The processing circuitry then adjusts the position and orientation of the distance overlay lines **56a, 56b,** and **56c** to precisely match these features, accounting for any distortion or perspective effects caused by the camera lenses or vehicle geometry.

For the purposes of this alignment, "position data" refers to a set of parameters describing the location and orientation of each feature in the image. This includes, but is not limited to, the x and y pixel coordinates of the feature's centroid, the angle of the feature's major axis relative to a reference direction, and the intensity or color of the feature. The processing circuitry **702** analyzes this position data using a combination of geometric transformations and optimization algorithms. For example, the circuitry may apply a perspective transformation to account for the camera's viewing angle and lens distortion, and then use a least-squares algorithm to minimize the difference between the measured positions of the features and their expected positions based on a pre-defined calibration model.

The processing circuitry **702** may employ sophisticated algorithms and control logic to ensure accurate and reliable camera alignment. In one example, the system first analyzes the image data **54a, 54b, 54c** to detect the presence and characteristics of the emitted light pattern **62.** This may involve techniques such as edge detection, corner detection, or pattern recognition to identify the key features of the pattern. The processing circuitry then compares the detected features to a known reference model of the light pattern, which is stored in memory **704.** Any deviations between the detected features and the reference model are interpreted as misalignment errors. The processing circuitry then calculates the appropriate adjustments to the distance overlay lines **56a, 56b,** and **56c** to compensate for these errors, using a combination of geometric transformations, interpolation techniques, and optimization algorithms. To ensure stable and accurate alignment, the system may also employ a feedback control loop that continuously monitors the alignment status and makes small adjustments over time to correct for any drift or variations. The control logic is designed to be robust to noise, outliers, and other sources of error, ensuring reliable performance in a wide range of conditions.

The first portion **63a** of the emitted light pattern **62** comprises position data **57a.** The second portion **63b** of the emitted light pattern **62** comprises position data **57b.** The third portion **63c** of the emitted light pattern **62** comprises position data **57c.**

Preferably, alignment of the first and second camera **50a, 50b** are performed in a ground plane. This ground plane alignment ensures that the cameras are calibrated to accurately perceive objects and distances on the ground surface, which is important for various applications such as lane departure warning, adaptive cruise control, and automated parking. By aligning the distance overlay lines **56a, 56b** within this ground plane, the system can effectively compensate for variations in camera mounting, vehicle suspension, and road surface irregularities. The alignment within the ground plane effectively focuses the camera system on the area most relevant for driving and maneuvering, improving the accuracy and reliability of the sensor data. In other embodiments, the cameras may be aligned to a reference surface or reference plane that is not necessarily the ground. This could be a predetermined plane parallel to the vehicle's chassis, a plane defined by the horizon, or a virtual plane established based on sensor data from other vehicle systems. Alternatively, the cameras may be aligned with respect to a vehicle coordinate system, which is a defined set of axes and origin points fixed to the vehicle's chassis. This allows the system to maintain accurate alignment regardless of the vehicle's orientation relative to the ground or other external references.

In one example, the processing circuitry **702** is further configured to process the position data **57a** of the first portion **63a** and the position data **57b** of the second portion **63b** in order to align the first camera **50a** and the second camera **50b** relative to each other. In one example, the first camera **50a** and the second camera **50b** are aligned in a ground plane. The ground plane may be a plane extending on the ground **G.** The ground plane may be plan extending in the x and y- direction. The ground plane may be a horizontal plane.

In one example, the position data is defined by positions on xy-coordinates or on xyz-coordinates. The use of xy-coordinates provides a simplified representation of the position data, suitable for applications where the camera system is primarily concerned with horizontal alignment. In this case, the z-coordinate (height) may be assumed to be constant or may be ignored. Conversely, the use of xyz-coordinates provides a more complete 3D representation of the position data, which may be important for applications where the camera system must account for variations in height or perspective. For example, if the vehicle is parked on an uneven surface or if the cameras are mounted at different heights, the xyz-coordinates can be used to accurately compensate for these variations. The choice between xy and xyz coordinates may depend on the specific requirements of the application and the capabilities of the camera system.

In one example, the processing circuitry **702** is further configured to process the position data **57c** of the third portion **63c** and the position data **57b** of the second portion **63b** in order to align the third camera **50c** and the second camera **50b** relative to each other.

In one example, the processing circuitry **702** is configured to process the position data **57a** of the first portion **63a,** the position data **57b** of the second portion **63b** and the position data **57c** of the third portion **63c** in order to align the first camera **50a,** the second camera **50b** and the third camera **50c** relative to each other.

In one example, the alignment of the respective distance overlay lines **56a-c** with the respective portions **63a-c** are based on the position data. The position data, which may be defined by xy or xyz coordinates, allows the processing circuitry **702** to calculate the precise spatial relationship between the distance overlay lines and the corresponding features in the emitted light pattern. The alignment process then involves adjusting the position and orientation of the distance overlay lines until they perfectly coincide with the corresponding features in the emitted light pattern, ensuring accurate camera alignment.

In one example, the alignment of the respective distance overlay lines **56a-c** with the respective portions **63a-c** are based on a delta between the first image data **54a** from the first camera **50a,** the second image data **54b** from the second camera **50b,** and the third image data **54c** from the third camera **50c.** By analyzing the delta, or difference, between the image data captured by the different cameras, the processing circuitry **702** can determine the precise amount of adjustment needed to align the distance overlay lines with the corresponding features in the emitted light pattern. This approach allows the system to compensate for variations in camera position, orientation, and calibration, ensuring accurate alignment even in challenging conditions.

In one example, the position data is used to re-position to field of view of the first camera **50a,** the second camera **50b** and/or the third camera **50c.**

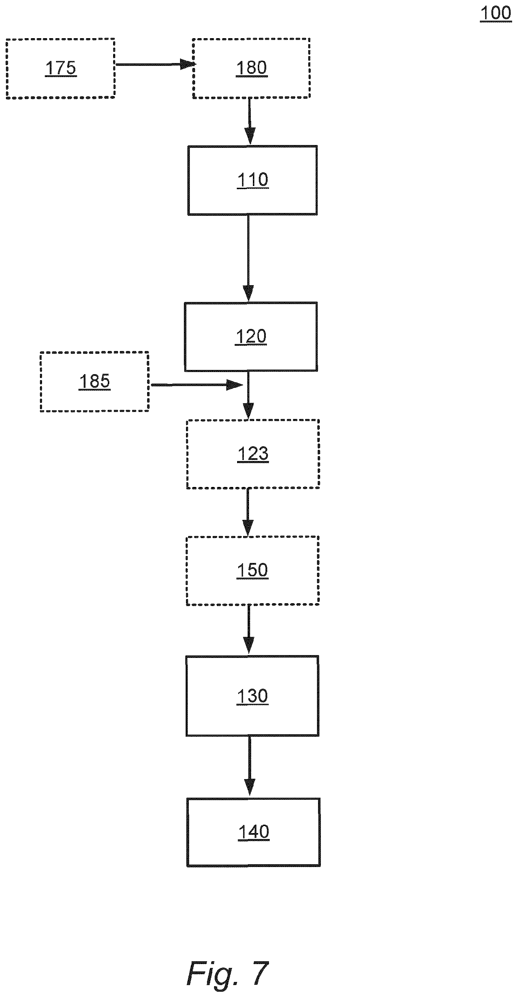

**FIG. 7** illustrates an example of a computer-implemented method. Step **110** comprises projecting a light pattern **62** onto a ground **G** spanning field views **F** of at least a first camera **50a** and a second camera **50b.** Step 120 comprises obtaining image data **54a, 54b, 54c** from cameras 50. In certain embodiments, two cameras are used. In other embodiments, three cameras may be used. In certain embodiments, first image data 54a is obtained from the first camera **50a,** second image data is obtained from the second camera **50b.** The first image data **54a** includes a first portion **63a** of the emitted light pattern **62.** The second image data **54b** includes a second portion **63b** of the emitted light pattern **62.** In certain embodiments, a third camera may be used with third image data obtained from a third camera. In other embodiments, more cameras may be used.

The method further comprises aligning **130,** a first distance overlay line **56a** with the first portion **63a** of the emitted light pattern **62** of the first image data **54a** and aligning **130** a second distance overlay line **56b** with the second portion **63b** of the emitted light pattern of the second image data **54b.** In one example, the alignment **130** is performed by receiving a user input. The user input may for example be received using a touch-display **30.** In an alternative example, the alignment **130** is performed automatically by the processing circuitry **702.** The alignment may be performed by using a machine learning algorithm trained on a dataset of calibrated camera systems to accurately determine the optimal alignment parameters based on the captured image data and vehicle sensor data. The processing circuitry may also employ iterative optimization techniques to refine the alignment over time, ensuring long-term accuracy and stability.

The camera alignment process can be initiated in several ways. The driver may manually initiate the alignment process by pushing a button on the dashboard, selecting an option within the vehicle's infotainment system, or using a mobile app connected to the vehicle. Alternatively, the alignment process can be automatically initiated each time the vehicle is started, ensuring that the cameras are always properly aligned. In another embodiment, the alignment process can be performed periodically based on a timer, ensuring long-term accuracy and stability. The alignment process can also be triggered by sensor data indicating a potential misalignment. For example, the system may monitor the vehicle's load sensors, suspension sensors, or tire pressure sensors and initiate the alignment process if significant changes are detected. The system may also monitor the vehicle's inertial measurement unit (IMU) to detect rough road conditions or impacts that could cause misalignment. Further, the alignment process can be initiated as part of a routine vehicle diagnostic check, ensuring that the camera system is functioning properly.

In embodiments where the alignment process is at least partially manual, the driver can adjust the position and orientation of the distance overlay lines 56a and 56b using an input device. The driver may be guided by visual cues and feedback from the system, such as a real-time display of the camera images and the alignment error. The system may also provide suggestions for optimal overlay line placement based on the captured image data and vehicle sensor data. The driver may then confirm to the system that the changes are appropriate.

Regardless of whether the alignment is performed automatically or manually, the key objective is to achieve a precise match between the distance overlay lines and the corresponding features in the emitted light pattern and the underlying camera images. This ensures that the camera system is accurately calibrated and provides reliable sensor data for the vehicle's various safety and assistance systems.

In one example, the alignment **130** is performed by adjusting the first distance overlay line **56a** and/or the second distance overlay line **56b** with at least the first or second portion **63a, 63b** of the emitted light pattern **62.** In an alternative example, the alignment **130** is performed by adjusting at least the first or second portion **63a, 63b** of the emitted light pattern **62.**

The method may further comprise processing **140** position data of the first portion of the emitted light pattern and position data of the first portion of the emitted light pattern. In one example, the position data may be used to align the first camera **50a** and the second camera **50b** relative to each other. In one example, the position data is used to alter the field of view of the cameras. In one example, the position data is used for aligning the distance overlay lines with the portions of the emitted light pattern.

In one example, the position data is used to create a common reference for all cameras. The common reference may be a common reference point or a common reference line. The common reference may be used to connect the field of view of the plurality of cameras. The connected field of views of the cameras may be used to align the cameras relative each other. Hence, in one example, the method comprises obtaining or processing position data of the portions of the emitted light pattern. The method further comprises determining a common reference for the plurality of cameras, and aligning the cameras based on the common reference.

The method may optionally further comprise obtaining **123** a first distance overlay line and obtaining **123** a second distance overlay line. In one example, the distance overlay line **56a, 56b** is obtained from the processing circuitry **702.** In another example, the distance overlay line **56a, 56b** is obtained from the cameras **50a, 50b.**

The method may optionally further comprise displaying **150** the first portion **63a** of the emitted light pattern **62** and the first distance overlay line **56** on at least one display **30a, 30b, 30c,** and/or displaying **150** the second portion **63b** of the emitted light pattern **62** and the second distance overlay line **56b** on at least one display **30a, 30b, 30c.** In one example, the alignment of the first and second distance overlay line **56a, 56b** aligns the first and second camera **50a, 50b** in a ground plane.

The method may further comprise adapting or altering **180** the emitted light pattern **62.** The adapting/altering of the emitted light pattern **62** may comprise altering the shape, dimension, wavelength, intensity and/or brightness of the emitted light. Hence, the adaptation of the emitted light pattern **62** comprises changing the wavelength of the emitted light, changing the intensity of the emitted light and/or changing the shape of the emitted light pattern. The adapting/altering may be made automatically by the processing circuitry **702,** by a user prompting the processing circuitry **702** or manually by the user. For example, if the system detects heavy rain, the intensity of the emitted light pattern may be increased to improve visibility, or the wavelength may be shifted towards the infrared spectrum to reduce glare for the driver. This dynamic adaptation enhances the robustness and reliability of the camera alignment system in adverse conditions.

In one example, the processing circuitry **702** is configured to obtain information **175** pertaining to the surrounding conditions of the vehicle. The surrounding conditions of the vehicle may be ambient conditions of the vehicle. The ambient conditions may for example relate to temperature, humidity, air pressure, wind speed, and/or solar radiation. Other examples of ambient conditions relate to road surface conditions (such as rough roads, snow, ice, rain, mud, etc.), and pollution levels.

In one example, the processing circuitry **702** is configured to alter the shape/dimensions of the light pattern **62** based on the obtained information pertaining to the surrounding conditions of the vehicle. In yet one example, the user of the vehicle may manually alter the shape of the emitted light pattern **62** based on the obtained information pertaining to the surrounding conditions of the vehicle. For instance, if the road surface is uneven, the dimensions of the light pattern may be expanded to cover a larger area, ensuring that the cameras capture sufficient data for accurate alignment.

In one example, the processing circuitry **702** is configured to obtain information pertaining to the surrounding conditions of the vehicle. The processing circuitry **702** is configured to alter the wavelength based on the obtained information pertaining to the surrounding conditions of the vehicle. In yet one example, the user of the vehicle may manually alter the wavelength of the emitted light pattern **62.** For instance, if fog is detected, the wavelength of the emitted light pattern may be shifted towards the red or infrared spectrum, which is less susceptible to scattering by fog particles, thereby improving the visibility of the pattern and the accuracy of the camera alignment.

In one example, the processing circuitry **702** is configured to obtain information pertaining to the surrounding conditions of the vehicle, and to alter the intensity and/or brightness based on the obtained information pertaining to the surrounding conditions of the vehicle. In yet one example, the user of the vehicle may manually alter the intensity of the emitted light pattern **62.** For example, in low-light conditions, the intensity of the emitted light pattern may be increased to ensure that it is clearly visible to the cameras. Conversely, in bright sunlight, the intensity may be reduced to prevent glare or saturation of the camera sensors.

In one example, the processing circuitry **702** is configured to recognize **185** the shape of the light pattern **62.** The specific shape may be associated with characteristics of a specific vehicle type. The processing circuitry **702** may thus be configured to identify the shape of the light pattern **62,** and based on said identification retrieve information relating to the specific vehicle **10.** The information may for example pertain to vehicle type, wheel size, wheel numbers, dimensions of the vehicle, dimensions of the trailer unit, dimensions of the tractor, information of the camera system on the vehicle, and other relevant characteristics of the vehicle. In other words, the processing circuitry **702** is configured to identify **185** the shape of the light pattern **62,** the first portion **63a** and/or the second portion **63b,** wherein the shape is associated with an identifier containing characteristics of the vehicle **10.**

The method may further comprise obtaining **120** third image data **54c** from a third camera **50c,** wherein the third image data **54c** includes a third portion **63c** of the emitted light pattern **62** from the at least one light projector **60.** The method further comprises aligning **123** a third distance overlay line **56c** with the third portion **63c** of the emitted light pattern **62** of the third image data **54c.**

In one example, all method steps of the camera alignment process, including projecting the light pattern, obtaining image data, and aligning the overlay lines, are performed automatically by the processing circuitry **702** without any driver intervention. In a preferred embodiment, even when the alignment process is fully automated, the visual information module 30 displays the progress and results of the alignment to the driver, providing them with confidence that the system is functioning correctly. The display may show the emitted light pattern, the overlay lines, and an indication of the alignment accuracy, such as a color-coded scale or a numerical score.

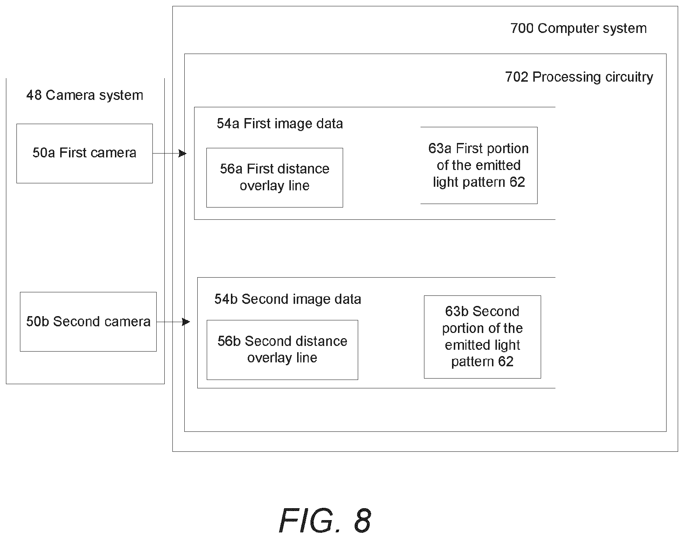

**FIG. 8** depicts a computer system **700** comprising processing circuitry **702** configured to project **110,** from at least one light projector **60** of a vehicle **10,** a light pattern **62** onto a ground **G** spanning field views of a first camera **50a** and a second camera **50b,** obtain **120** first image data **54a** from the first camera **50a,** wherein the first image data **54a** includes a first portion **63a** of the emitted light pattern **62** from the at least one light projector **60** and obtain **120** second image data **54b** from the second camera **50b,** wherein the second image data **54b** includes a second portion **63b** of the emitted light pattern from the at least one light projector **60.** The processing circuitry **702** is further configured to align **130** a first distance overlay line **56a** with the first portion **63a** of the emitted light pattern **62** of the first image data **54a** and align **130** a second distance overlay line **56b** with the second portion **63b** of the emitted light pattern of the second image data **54b.**

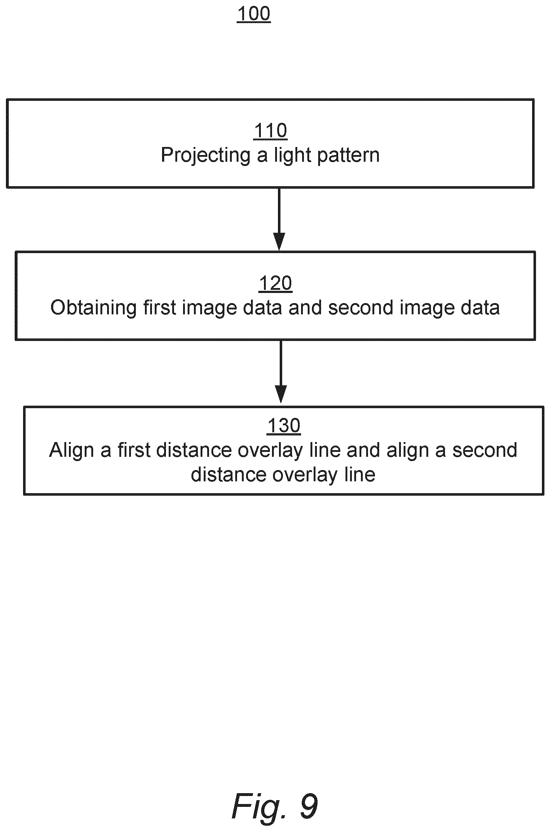

**FIG. 9** depicts a computer-implemented method according to an example. The method comprises projecting **110,** from at least one light projector **60** of a vehicle **10,** a light pattern **62** onto a ground **G** spanning field views of a first camera **50a** and a second camera **50b,** obtaining **120,** from a camera system **48,** first image data **54a** from the first camera **50a,** wherein the first image data **54a** includes a first portion **63a** of the emitted light pattern **62** from the at least one light projector **60.** The method further comprises obtaining **120,** from a camera system **48,** second image data **54b** from the second camera **50b,** wherein the second image data **54b** includes a second portion **63b** of the emitted light pattern from the at least one light projector **60.** The method further comprises aligning **130,** a first distance overlay line **56a** with the first portion **63a** of the emitted light pattern **62** of the first image data **54a** and aligning **130** a second distance overlay line **56b** with the second portion **63b** of the emitted light pattern of the second image data **54b.**

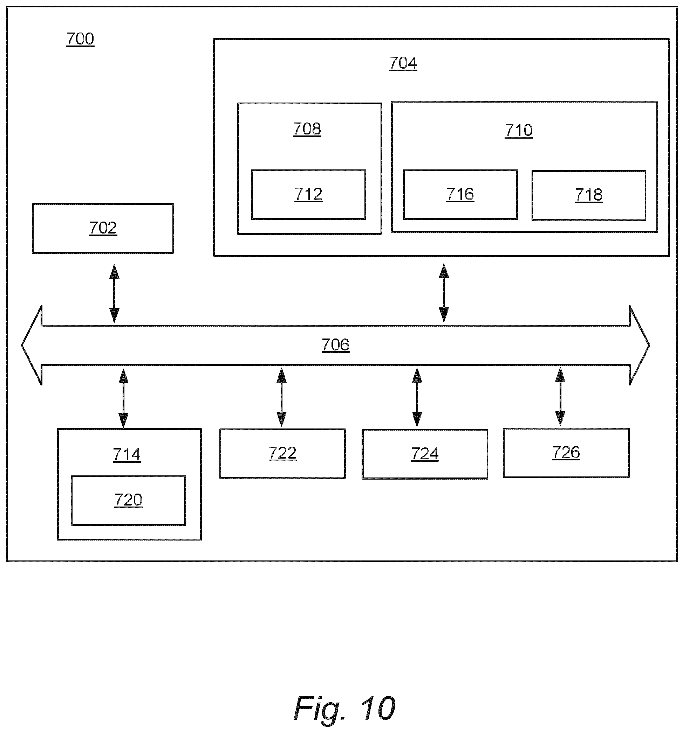

**FIG. 10** is a schematic diagram of a computer system **700** for implementing examples disclosed herein. The computer **system700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: project, from at least one light projector of a vehicle, a light pattern onto a ground spanning field views of a first camera and a second camera, obtain first image data from the first camera, wherein the first image data includes a first portion of the emitted light pattern from the at least one light projector; obtain second image data from the second camera, wherein the second image data includes a second portion of the emitted light pattern from the at least one light projector; align a first distance overlay line with the first portion of the emitted light pattern of the first image data by adjusting the first distance overlay line or adjusting the first portion of the emitted light pattern; and align a second distance overlay line with the second portion of the emitted light pattern of the second image data by adjusting the second distance overlay line or adjusting the second portion of the emitted light pattern.

Example 2: The computer system of example 1, wherein the alignment of at least one of the first distance overlay line and the second distance overlay line is performed by receiving a user input.

Example 3: The computer system of example 1, wherein the alignment of at least one of the first distance overlay line and the second distance overlay line is performed automatically by the processing circuitry.

Example 4: The computer system of any of example 1-3, the processing circuitry is further configured to process position data of the first portion of the emitted light pattern and position data of the second portion of the emitted light pattern, align the first distance overlay line with the first portion of the emitted light pattern based on the position data; and align the second distance overlay line with the second portion based on the position data.

Example 5: The computer system of any of example 1-4, the alignment of the first and second distance overlay line aligns the first and second camera in a ground plane.

Example 6: the processing circuitry is further configured to process position data of the first portion of the emitted light pattern and position data of the second portion of the emitted light pattern, and reposition the field of view for the first camera and the second camera based on the position data.

Example 7: The computer system of any of example 1 - 6, wherein the first portion and the second portion have the same position data.

Example 8: The computer system of any of example 1-7, wherein the processing circuitry is further configured to: at least display the first portion of the emitted light pattern and the first distance overlay line on at least one display, or display the second portion of the emitted light pattern and the second distance overlay line on at least one display.

Example 9: The computer system of any of example 1-8, wherein the processing circuitry is further configured to: obtain a first distance overlay line, and obtain a second distance overlay line.

Example 10: The computer system of any of example 1-9, wherein the processing circuitry is further configured to obtain information pertaining to the surrounding conditions of the vehicle; and adapt the emitted light pattern based on said obtained information.

Example 11: The computer system of example 10, wherein the adaptation of the emitted light pattern comprises at least changing the wavelength of the emitted light, changing the intensity of the emitted light or changing the shape of the emitted light pattern.

Example 12: The computer system of example 10 or 11, wherein the information pertaining to the surrounding conditions of the vehicle comprises one or more of: temperature, humidity, weather, air pressure, wind speed, solar radiation, pollution levels, and road surface conditions.

Example 13: The computer system of any of example 1-12, wherein the processing circuitry is further configured to at least identify the shape of the light pattern, the first portion or the second portion, wherein the shape is associated with an identifier containing characteristics of the vehicle.

Example 14: The computer system of any of example 1-13, wherein at least the shape of the light pattern, the first portion or the second portion is a bar code or a logotype of the vehicle brand.

Example 15: The computer system of any of example 1-12, wherein the processing circuitry is further configured to obtain third image data from a third camera, the third image data including a third portion of the emitted light pattern from the at least one light projector; align a third distance overlay line with the third portion of the emitted light pattern of the first image data; process position data of the first portion of the emitted light pattern, position data of the second portion of the emitted light pattern and position data of the third portion of the emitted light pattern to align the first camera, the second camera and the third camera relative to each other.

Example 16: The computer system of any of example 1-15, wherein the at least the first portion or the second portion comprises at least one point in a line segment.

Example 17: A vehicle comprising at least one light projector, a camera system and the computer system of any of example 1 - 16.

Example 18: The vehicle of example 17, wherein the at least one light projector is arranged on a rear portion of the vehicle.

Example 19: The vehicle of example 18, wherein the camera system comprises at least two cameras, being a left rear-facing camera, a right rear-facing camera or a center rear-facing camera.

Example 20: A computer-implemented method comprising projecting, from at least one light projector of a vehicle, a light pattern onto a ground spanning field views of a first camera and a second camera, obtaining, from a camera system, first image data from the first camera, wherein the first image data includes a first portion of the emitted light pattern from the at least one light projector; obtaining, from a camera system, second image data from the second camera, wherein the second image data includes a second portion of the emitted light pattern from the at least one light projector; aligning a first distance overlay line with the first portion of the emitted light pattern of the first image data by adjusting the first distance overlay line or adjusting the first portion of the emitted light pattern; and aligning a second distance overlay line with the second portion of the emitted light pattern of the second image data by adjusting the second distance overlay line or adjusting the second portion of the emitted light pattern.

Example 21: A computer program product comprising program code for performing, when executed by the processing circuitry, the method of example 20.

Example 22: A non-transitory computer-readable storage medium comprising instructions, which when executed by the processing circuitry, cause the processing circuitry to perform the method of example 20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) for aligning at least a first camera (50) and a second camera (50b) of a vehicle (10), the computer system (700) comprising processing circuitry (702) configured to:
project, from at least one light projector (60) of the vehicle (10), a light pattern (62) onto a ground (G) spanning field views (F) of the first camera (50a) and the second camera (50b),
obtain first image data (54a) from the first camera (50a), wherein the first image data (54a) includes a first portion (63a) of the emitted light pattern (62) from the at least one light projector (60);
obtain second image data (54b) from the second camera (50b), wherein the second image data (54b) includes a second portion (63b) of the emitted light pattern from the at least one light projector (60);
align a first distance overlay line (56a) with the first portion (63a) of the emitted light pattern (62) of the first image data (54a) by adjusting the first distance overlay line (56a) or adjusting the first portion (63a) of the emitted light pattern (62);
align a second distance overlay line (56b) with the second portion (63b) of the emitted light pattern of the second image data (54b) by adjusting the second distance overlay line (56b) or adjusting the second portion (63b) of the emitted light pattern (62),
wherein the alignment of the first and second distance overlay line (56a, 56b) aligns the first and second camera (50a, 50b) in a ground plane.

2. The computer system (700) of claim 1, wherein the alignment of at least one of the first distance overlay line and the second distance overlay line (56a, 56b) is performed by receiving a user input (74).

3. The computer system (700) of claim 1, wherein the alignment of at least one of the first distance overlay line and the second distance overlay line (56a, 56b) is performed automatically by the processing circuitry (702).

4. The computer system (700) of any of claim 1-3, wherein the alignment of the first distance overlay line (56a) with the first portion (63a) and the alignment of the second distance overlay line (56b) with the second portion (63b) are visibly shown on at least one display (30a, 30b, 30c).

5. The computer system (700) of any of claim 1-4, wherein the processing circuitry (702) is further configured to:
display (150) the first portion (63a) of the emitted light pattern (62) and the first distance overlay line (56a) on at least one display (30a, 30b, 30c), and
display (150) the second portion (63b) of the emitted light pattern (62) and the second distance overlay line (56b) on at least one display (30a, 30b, 30c).

6. The computer system (700) of any of claim 1-5, wherein the processing circuitry (702) is further configured to:
process position data of the first portion (63a) of the emitted light pattern (62) and position data of the second portion (63b) of the emitted light pattern (62)
align the first distance overlay line (56a) with the first portion (63a) of the emitted light pattern (62) based on the processed position data; and
align the second distance overlay line (56b) with the second portion (63b) based on the processed position data.

7. The computer system (700) of any of claim 1-6, wherein the processing circuitry (702) is further configured to:
process position data of the first portion (63a) of the emitted light pattern (62) and position data of the second portion (63b) of the emitted light pattern (62); and
re-position the field of view for the first camera (50a) and the second camera (50b) based on the processed position data.

8. The computer system (700) of any of claim 1-7, wherein the processing circuitry (702) is further configured to:
obtain (175) information pertaining to the surrounding conditions of the vehicle (10); and
adapt (180) the emitted light pattern (62) based on said obtained information.

9. The computer system (700) of any of claim 1-8, wherein the processing circuitry (702) is further configured to:
obtain third image data (54a) from a third camera (50a), the third image data (54a) including a third portion (63a) of the emitted light pattern (62) from the at least one light projector (60); and
process position data of the first portion (63a) of the emitted light pattern (62), position data of the second portion (63b) of the emitted light pattern (62) and position data of the third portion (63c) of the emitted light pattern (62);
align the first distance overlay line (56a) with the first portion (63a) of the emitted light pattern (62) based on the processed position data;
align the second distance overlay line (56b) with the second portion (63b) based on the processed position data; and
align a third distance overlay line (56a) with the third portion (63a) of the emitted light pattern (62) of the first image data (54a) based on the processed position data.

10. The computer system (700) of any of claim 1-9, wherein the alignment process is automatically triggered based on one or more of: data from one or more sensors indicating a potential misalignment, upon vehicle start-up, periodically based on a pre-set timer, or as part of a routine vehicle diagnostic check.

11. The computer system (700) of any of claim 1-10, wherein the processing circuitry (702) is further configured to generate a notification to the driver upon completion of the alignment process.

12. A vehicle (10) comprising at least one light projector (60), a camera system (48) and the computer system (700) of any of claim 1 - 11.

13. A computer-implemented method (100) for aligning at least a first camera (50) and a second camera (50b) of a vehicle (10) comprising:
projecting (110), from at least one light projector (60) of the vehicle (10), a light pattern (62) onto a ground (G) spanning field views of the first camera (50a) and the second camera (50b),
obtaining (120), from a camera system (48), first image data (54a) from the first camera (50a) and second image data (54b) from the second camera (50b), wherein the first image data (54a) includes a first portion (63a) of the emitted light pattern (62) from the at least one light projector (60)and the second image data (54b) includes a second portion (63b) of the emitted light pattern from the at least one light projector (60);
aligning (130) a first distance overlay line (56a) with the first portion (63a) of the emitted light pattern (62) of the first image data (54a) by adjusting the first distance overlay line (56a) or adjusting the first portion (63a) of the emitted light pattern (62); and aligning (130) a second distance overlay line (56b) with the second portion (63b) of the emitted light pattern of the second image data (54b) by adjusting the second distance overlay line (56b) or adjusting the second portion (63b) of the emitted light pattern (62);
wherein the alignment of the first and second distance overlay line (56a, 56b) aligns the first and second camera (50a, 50b) in a ground plane.

14. A computer program product comprising program code for performing, when executed by the processing circuitry, the method (100) of claim 13.

15. A non-transitory computer-readable storage medium comprising instructions, which when executed by the processing circuitry, cause the processing circuitry to perform the method (100) of claim 13.
